# EUROPÄISCHE PATENTANMELDUNG

(11) **EP 2 873 464 A1**
(43) Veröffentlichungstag der Anmeldung: **20.05.2015**
(21) Anmeldenummer: 13192681.8
(22) Anmeldetag: 13.11.2013
(51) Int. Cl.: B03C 3/68, G05B 13/00

(54) **Filterung eines Feststoffpartikel aufweisenden Abgases einer hüttentechnischen Anlage**

(71) Anmelder: Siemens VAI Metals Technologies GmbH, 4031 Linz (AT)
(72) Erfinder: Aufreiter, Philipp, 4020 Linz (AT); Keusch, Thomas, 3363 Neufahrt (AT); Wackerle, Florian, 4020 Linz (AT); Hartl, Franz, 4720 Kallham (AT); Fleischanderl, Johann, 4271 St. Oswald (AT); Lehofer, Martin, 4050 Traun (AT); Rohrhofer, Andreas, 4020 Linz (AT); Weinzinger, Michael, 4020 Linz (AT)
(74) Vertreter: Maier, Daniel Oliver

(57) **Zusammenfassung**

Die Erfindung betrifft ein Verfahren zum Betrieb einer Filteranlage (1) zur Filterung eines Feststoffpartikel (10) aufweisenden Abgases (11) einer hüttentechnischen Anlage (12), wobei die Filteranlage (1) zumindest ein Elektrodenpaar (2) aufweist, welches jeweils mit einer elektrischen Leistung und/oder einer elektrischen Spannung und/oder einem elektrischen Strom beaufschlagbar ist. Weiterhin betrifft die Erfindung ein System zum Betrieb einer derartigen Filteranlage (1) und eine Anlage zur Filterung eines Stoffpartikel (10) aufweisenden Abgases (11) einer hüttentechnischen Anlage (12), welche eine derartige Filteranlage (1) umfasst. Um ein Verfahren bzw. eine Vorrichtung bereitzustellen, mittels welchem bzw. welcher ein Feststoffpartikel (10) aufweisendes Abgas (11) einer hüttentechnischen Anlage (12) ressourcenschonender gefiltert werden kann, werden die folgenden Verfahrensschritte vorgeschlagen:
- Ermitteln einer Prozessphase (7) der hüttentechnischen Anlage (12),
- Ermitteln einer jeweiligen, von der ermittelten Prozessphase (7) abhängigen Vorsteuerung (8) des jeweiligen Elektrodenpaares (2), wobei die jeweilige ermittelte Vorsteuerung (8) eine jeweilige zu beaufschlagende elektrische Leistung und/oder eine jeweilige zu beaufschlagende elektrische Spannung und/oder einen jeweiligen zu beaufschlagenden elektrischen Strom umfasst,
- Beaufschlagen des jeweiligen Elektrodenpaares (2) gemäß der jeweiligen ermittelten Vorsteuerung (8).

## Beschreibung

Die Erfindung betrifft ein Verfahren zum Betrieb einer Filteranlage zur Filterung eines Feststoffpartikel aufweisenden Abgases einer hüttentechnischen Anlage, wobei die Filteranlage zumindest ein Elektrodenpaar aufweist, welches jeweils mit einer elektrischen Leistung und/oder einer elektrischen Spannung und/oder einem elektrischen Strom beaufschlagbar ist. Weiterhin betrifft die Erfindung ein System zum Betrieb einer derartigen Filteranlage und eine Anlage zur Filterung eines Stoffpartikel aufweisenden Abgases einer hüttentechnischen Anlage, welche eine derartige Filteranlage umfasst.

In metallurgischen Industrieanlagen werden elektrische Filter, auch E-Filter genannt, zur Reinigung von Abgasen eingesetzt. Diese Filter funktionieren nach dem Prinzip, dass durch Ionisation der Staubteilchen im Abgas mittels zweier Platten, welche als Sprühelektrode und Niederschlagselektrode bezeichnet werden, die Staubteilchen an eine Platte gezogen werden. Von den Platten werden die Staubteilchen über eine mechanische Apparatur entfernt, z.B. durch Schläge auf die Platten. Die Staubteilchen fallen von den Platten und werden zu einem Staubbehälter transportiert und dort gesammelt. Ein E-Filter kann beispielsweise ca. 30 Plattenpaare aufweisen.

Die Verschmutzung des Abgases mit Staub ist abhängig vom Prozesszustand der metallurgischen Anlage, die den Filter versorgt. Bei einem Konverter tritt z.B. während des Frischvorgangs die größte Staubkonzentration auf, im Gegensatz zum Scrap Chargieren, bei welcher die Staubkonzentration niedrig ist.

Unabhängig vom Prozesszustand und der damit zu erwartenden Staubkonzentration im Abgas werden E-Filter in metallurgischen Industrieanlagen ungeregelt betrieben. Das bedeutet, dass die Stärke des elektrischen Feldes zwischen den Platten während des gesamten Produktionsprozesses gleich bleibt. Eine Abschaltung bei Produktionspausen wird dabei vom Personal manuell durchgeführt.

Ein derartiger Elektrofilter und ein Verfahren zu dessen Betrieb sind beispielsweise aus der DE632608C oder aus der EP0210675 A1 bekannt.

Der Erfindung liegt die Aufgabe zugrunde, ein Verfahren bzw. eine Vorrichtung bereitzustellen, mittels welchem bzw. welcher ein Feststoffpartikel aufweisendes Abgas einer hüttentechnischen Anlage ressourcenschonender gefiltert werden kann.

Diese Aufgabe wird durch ein Verfahren der eingangs genannten Art dadurch gelöst, dass das Verfahren die folgenden Verfahrensschritte aufweist:
- Ermitteln einer Prozessphase der hüttentechnischen Anlage,
- Ermitteln einer jeweiligen, von der ermittelten Prozessphase abhängigen Vorsteuerung des jeweiligen Elektrodenpaares, wobei die jeweilige ermittelte Vorsteuerung eine jeweilige zu beaufschlagende elektrische Leistung und/oder eine jeweilige zu beaufschlagende elektrische Spannung und/oder einen jeweiligen zu beaufschlagenden elektrischen Strom umfasst,
- Beaufschlagen des jeweiligen Elektrodenpaares gemäß der jeweiligen ermittelten Vorsteuerung.

Weiterhin wird diese Aufgabe durch ein System der eingangs genannten Art dadurch gelöst, dass das System eine Recheneinheit aufweist, mittels welcher eine Prozessphase der hüttentechnischen Anlage und eine jeweilige, von der ermittelten Prozessphase abhängige Vorsteuerung des jeweiligen Elektrodenpaares ermittelbar sind, wobei die jeweilige ermittelte Vorsteuerung eine jeweilige zu beaufschlagende elektrische Leistung und/oder eine jeweilige zu beaufschlagende elektrische Spannung und/oder einen jeweiligen zu beaufschlagenden elektrischen Strom umfasst.

Schließlich wird diese Aufgabe durch eine Anlage der eingangs genannten Art dadurch gelöst, dass die Anlage ein derartiges System aufweist.

Die Filteranlage weist zumindest ein Elektrodenpaar auf, welches jeweils beispielsweise als Plattenpaar ausgebildet ist. Vorzugsweise ist die Filteranlage in zwei oder mehr Felder bzw. Bereiche untergliedert, welche beispielsweise in Strömungsrichtung des Abgases hintereinander angeordnet sind, wobei in jedem der Felder zumindest ein Elektrodenpaar vorgesehen ist.

Insbesondere wird die jeweilige, von der ermittelten Prozessphase abhängige Vorsteuerung des jeweiligen Elektrodenpaares vorab festgelegt, wobei die jeweilige Vorsteuerung insbesondere für mehrere Elektrodenpaare in unterschiedlichen Feldern separate Vorgaben vorsieht. Die separaten Vorgaben beziehen sich dabei auf die jeweilige zu beaufschlagende elektrische Leistung und/oder auf die jeweilige zu beaufschlagende elektrische Spannung und/oder den jeweiligen zu beaufschlagenden elektrischen Strom. Gegebenenfalls kann die Vorsteuerung auch eine Drehzahl eines Ventilators bzw. Sauggebläses umfassen, welcher bzw. welches Teil der Filteranlage ist und das Abgas durch den E-Filter bzw. das zumindest eine Elektrodenpaar zieht. Falls die Vorsteuerung eine derartige Drehzahl umfasst, wird der entsprechende Ventilator bzw. das entsprechende Sauggebläse mit einer Drehzahl gemäß der Vorsteuerung betrieben. Generell kann die jeweilige Vorsteuerung als Stellgröße oder als Sollgröße für die jeweilige Größe verstanden werden.

Das zumindest eine Elektrodenpaar wird vorzugsweise mittels einer Hochspannungs-Energieversorgung mit der jeweiligen zu beaufschlagenden elektrischen Leistung und/oder der jeweiligen zu beaufschlagenden elektrischen Spannung und/oder dem jeweiligen zu beaufschlagenden elektrischen Strom versorgt. Wird durch die jeweilige Vorsteuerung eine elektrische Leistung als Stellgröße vorgegeben, so können beispielsweise die jeweilige zu beaufschlagende Spannung und/oder der jeweilige zu beaufschlagende Strom derart gewählt bzw. geregelt werden, dass die gewünschte Leistung an das jeweilige Elektrodenpaar abgegeben wird. Der jeweilige zu beaufschlagende elektrische Strom kann in einer analogen Vorgehensweise derart gewählt bzw. geregelt werden, dass das jeweilige Elektrodenpaar mit einer passend gewählten elektrischen Spannung beaufschlagt wird. Für den Fall, dass die Filteranlage mehrere Elektrodenpaare in unterschiedlichen Feldern aufweist, ist vorteilhafterweise vorgesehen, dass die Elektrodenpaare unterschiedlicher Felder separat beaufschlagbar sind.

Die Beaufschlagung des jeweiligen Elektrodenpaares wird von der Recheneinheit angestoßen, welche vorzugsweise mit der jeweiligen Hochspannungs-Energieversorgung verbunden ist. Erfindungsgemäß erfolgt die Beaufschlagung des jeweiligen Elektrodenpaares gemäß der jeweiligen, ermittelten Vorsteuerung, welche jeweils von der ermittelten Prozessphase der hüttentechnischen Anlage abhängt. Für das Beispiel eines Konverters als hüttentechnische Anlage sind unter anderem folgende Prozessphasen denkbar, für welche oftmals die englischen Fachbegriffe verwendet werden: Charging bzw. Scrap Charging, Ignition, Blowing, Tapping, Slag-Splashing. Da für die unterschiedlichen Prozessphasen unterschiedliche Abgas-Volumenströme bzw. unterschiedliche Abgas-Konzentrationen zu erwarten sind, kann das jeweilige Elektrodenpaar folglich gemäß einer jeweiligen, angepassten Vorsteuerung beaufschlagt werden.

Beispielsweise ist für die Prozessphase "Blowing", also das Sauerstoff-Einblasen, eine besonders leistungsstarke Vorsteuerung des jeweiligen Elektrodenpaares erforderlich, da während dieser Phase besonders große Mengen Abgas anfallen, welche insbesondere vergleichsweise viele Feststoffpartikel aufweisen. Entsprechend wird das jeweilige Elektrodenpaar mit einer vergleichsweise großen elektrischen Leistung und/oder Spannung und/oder einem vergleichsweise großen elektrischen Strom beaufschlagt, um möglichst viele der Feststoffpartikel aus dem Abgas herauszufiltern.

Andererseits ist für die Prozessphase "Scrap Charging", also das Einbringen des im Konverter zu verarbeitenden Materials, eine vergleichsweise schwache Vorsteuerung des jeweiligen Elektrodenpaares ausreichend, da während dieser Phase vergleichsweise geringe Abgasmengen und eine vergleichsweise geringe Menge von Feststoffpartikeln zu erwarten ist. Somit kann eine vergleichsweise große Stromersparnis bei der Filterung des Abgases realisiert werden, da die prinzipielle Funktionsweise eines E-Filters bedingt, dass bei einer geringen Staubbelastung die Spannung überschlagsfrei bis zum Maximum ansteigen kann und dies einen entsprechend hohen Strom zur Folge hat. Somit liegt der höchste Stromverbrauch bei der geringsten Staubkonzentration vor, so dass festgestellt werden kann, dass bei einem gering verschmutzten Abgas und einer konstanten Fahrweise bzw. Betriebsweise der Filteranlage die gezogene Leistung der Filteranlage am höchsten ist.

Insbesondere wenn die Filteranlage mehrere Felder mit jeweils zumindest einem Elektrodenpaar aufweist, kann für jede einzelne der Prozessphasen festgelegt werden, mit welcher Leistung und/oder Spannung und/oder mit welchem Strom das jeweilige Elektrodenpaar beaufschlagt wird bzw. die Elektrodenpaares des jeweiligen Bereichs der Filteranlage beaufschlagt werden.

Das erfindungsgemäße Verfahren ermöglicht eine Anpassung der Filterleistung der Filteranlage, indem das jeweilige Elektrodenpaar separat ansteuerbar ist, wobei die Anpassung auf den unterschiedlichen Prozessphasen der vorgeschalten hüttentechnischen Anlage und insbesondere auf daraus resultierenden, zu erwartenden Abgasmengen basiert. Dadurch kann der Stromverbrauch von elektrischen Abgasfiltern in metallurgischen Industrieanlagen in Abhängigkeit der Prozessphasen, insbesondere bei Einhaltung der Emissionsgrenzen, minimiert werden. Folglich erlaubt das erfindungsgemäße Verfahren eine ressourcenschonendere Filterung der Feststoffpartikel aus dem Abgas der hüttentechnischen Anlage.

Bei Pilotversuchen konnte für die Filteranlage eines Konverters eine Einsparung des Stromverbrauchs von bis zu 60 % erreicht werden. Dies entspricht einer Einsparung von ca. 100.000 € pro Jahr an Stromkosten, wenn übliche Strompreise in der Industrie angesetzt werden.

Bei einer vorteilhaften Ausgestaltung der Erfindung weist die hüttentechnische Anlage ein Automatisierungssystem auf, wobei das Automatisierungssystem die Prozessphase der hüttentechnischen Anlage bereitstellt.

Insbesondere ist das Automatisierungssystem der hüttentechnischen Anlage mit der Recheneinheit verknüpft, wodurch die Ermittlung der Prozessphase zuverlässig und mit vergleichsweise geringem technischem Aufwand realisiert werden kann. Dabei kann das Automatisierungssystem Level 1 oder Level 2 der Automatisierungspyramide zugeordnet sein. Insbesondere steuert bzw. regelt das Automatisierungssystem die Verarbeitungsprozesse der hüttentechnischen Anlage, welche unmittelbar mit den zu ermittelnden Prozessphasen verknüpft sind. Die jeweilige Prozessphase der hüttentechnischen Anlage kann somit beispielsweise dadurch ermittelt werden, dass das Automatisierungssystem die aktuelle Prozessphase der hüttentechnischen Anlage an die Recheneinheit übermittelt. Hierzu kann die Recheneinheit beispielsweise eine Anfrage bezüglich der Prozessphase an das Automatisierungssystem senden oder es kann eine zyklische Übertragung der aktuellen Prozessphase vorgesehen sein.

Bei einer weiteren vorteilhaften Ausgestaltung der Erfindung wird die Prozessphase jeweils bei einer Änderung der Prozessphase der hüttentechnischen Anlage bereitgestellt.

Eine besonders effiziente und dennoch sehr zuverlässige Kommunikation wird dadurch erreicht, dass lediglich bei einer Änderung der Prozessphase eine Bereitstellung der aktuellen Prozessphase stattfindet.

Bei einer weiteren vorteilhaften Ausgestaltung der Erfindung weist die hüttentechnische Anlage einen Konverter auf, wobei zur Ermittlung der Prozessphase der hüttentechnischen Anlage eine Position und/oder ein Drehwinkel des Konverters bereitgestellt wird.

Dabei korreliert die Position und/oder der Drehwinkel des Konverters mit der aktuellen Prozessphase der hüttentechnischen Anlage. Aus der Bereitstellung einer der Größen oder aus beiden Größen kann somit die aktuelle Prozessphase ermittelt werden, womit wiederum die jeweilige Vorsteuerung des jeweiligen Elektrodenpaares ermittelt wird.

Bei einer weiteren vorteilhaften Ausgestaltung der Erfindung weist die Filteranlage einen Eingangs-Staubsensor auf, welcher strömungstechnisch vor dem zumindest einen Elektrodenpaar angeordnet ist und mittels welchem eine Eingangs-Konzentration der Feststoffpartikel des in die Filteranlage strömenden Abgases erfasst wird, wobei die Prozessphase der hüttentechnischen Anlage anhand der erfassten Eingangs-Konzentration ermittelt wird.

Wie weiter oben schon erläutert, bedingen die unterschiedlichen Prozessphasen der hüttentechnischen Anlage unterschiedliche Abgasmengen und insbesondere unterschiedliche Konzentrationen der Feststoffpartikel im Abgas. Der Eingangs-Staubsensor erfasst die Eingangs-Konzentration der Feststoffpartikel des in die Filteranlage strömenden Abgases, wobei die erfasste Größe dazu verwendet wird, die aktuelle Prozessphase der hüttentechnischen Anlagen zu ermitteln.

Dies erlaubt eine von der hüttentechnischen Anlage und insbesondere von deren Automatisierungssystem unabhängige Ermittlung der Prozessphase. Beispielsweise kann somit auch das unerwartete oder ungewollte Vorliegen einer bestimmten Prozessphase ermittelt werden.

Für den Fall, dass die Ermittlung der Prozessphase zusätzlich auf einer Verbindung mit dem Automatisierungssystem der hüttentechnischen Anlage basiert, wird eine unabhängige Kontrolle des Automatisierungssystems bzw. der hüttentechnischen Anlage ermöglicht. Dies kann beispielsweise zu einer Rückmeldung an das Automatisierungssystem bzw. die hüttentechnische Anlage verwendet werden, falls Widersprüche zwischen der von dem Automatisierungssystem angegebenen Prozessphase und der mittels des Eingangs-Staubsensors ermittelten Prozessphase auftreten.

Bei einer alternativen vorteilhaften Ausgestaltung der Erfindung weist die Filteranlage einen Eingangs-Staubsensor auf, welcher strömungstechnisch vor dem zumindest einen Elektrodenpaar angeordnet ist und mittels welchem eine Eingangs-Konzentration der Feststoffpartikel des in die Filteranlage strömenden Abgases erfasst wird, wobei die jeweilige Vorsteuerung des jeweiligen Elektrodenpaares mittels einer mathematischen Formel aus der erfassten Eingangs-Konzentration berechnet wird.

Insbesondere stellt die mathematische Formel einen Zusammenhang zwischen der erfassten Eingangs-Konzentration und der jeweiligen, erforderlichen Vorsteuerung her. Somit wird aus der erfassten Eingangs-Konzentration anhand der mathematischen Formel direkt die jeweilige Vorsteuerung des jeweiligen Elektrodenpaares berechnet, ohne dass dafür der Zwischenschritt des Ermittelns der jeweiligen Prozessphase erforderlich ist.

Denkbar ist allerdings auch, dass die mathematische Formel dazu verwendet wird, zunächst die jeweilige Prozessphase der hüttentechnischen Anlage zu ermitteln, wobei aus der jeweiligen ermittelten Prozessphase die jeweilige Vorsteuerung bestimmt wird.

Bei einer weiteren vorteilhaften Ausgestaltung der Erfindung wird die jeweilige Vorsteuerung des jeweiligen Elektrodenpaares mittels einer vorgebbaren Tabelle ermittelt, in welcher eine Verknüpfung zwischen der ermittelten Prozessphase und der jeweiligen zu beaufschlagenden elektrischen Leistung und/oder der jeweiligen zu beaufschlagenden elektrischen Spannung und/oder dem jeweiligen zu beaufschlagenden elektrischen Strom hinterlegt ist.

Insbesondere umfasst die vorgebbare Tabelle für jede der denkbaren Prozessphasen die jeweilige Vorsteuerung, beispielsweise in Form von Vorgaben, welche jedes der Elektrodenpaare bzw. jedes der oben erläuterten Felder der Filteranlage betreffen. Für jede Prozessphase sind in der vorgebbaren Tabelle somit konkret die jeweilige zu beaufschlagende elektrische Leistung und/oder die jeweilige zu beaufschlagende elektrische Spannung und/oder der jeweilige zu beaufschlagende elektrischer Strom hinterlegt. Die jeweilige Vorsteuerung bzw. die zuvor genannten physikalischen Größen können dabei vorab ermittelt werden, beispielsweise indem entsprechende Versuche durchgeführt werden.

Die vorgebbare Tabelle mit den darin hinterlegten Verknüpfungen ermöglicht ein vergleichsweise simples Betriebsverfahren der Filteranlage. Insbesondere wenn die Prozessphase unter Zuhilfenahme des Automatisierungssystems der hüttentechnischen Anlage ermittelt wird, kann somit ohne großen Aufwand die jeweilige Vorsteuerung ermittelt werden. Beispielsweise liest die Recheneinheit hierzu die zu einer bestimmten Prozessphase gehörigen Einträge in der vorgebbaren Tabelle aus und veranlasst eine entsprechende Beaufschlagung des jeweiligen Elektrodenpaares gemäß der ermittelten Vorsteuerung. Vorzugsweise ist die vorgebbare Tabelle dabei in einer der Recheneinheit zugehörigen oder in einer mit der Recheneinheit verbundenen Speichereinheit abgelegt.

Für das Beispiel einer hüttentechnischen Anlage in Form eines Konverters kann die folgende exemplarische Vorsteuerung in der vorgebbaren Tabelle hinterlegt werden:

| Ermittelte Prozessphase | Soll-Wert Feld 1 | Soll-Wert Feld 2 | ··· | Soll-Wert Feld n |
|---|---|---|---|---|
| Scrap Charging | 10% | 10% | ··· | ··· |
| Ignition | 70% | 30% | ··· | ··· |
| Blowing | 100% | 100% | ··· | ··· |
| Tapping | 50% | 40% | ··· | ··· |
| Slag-Splashing | 70% | 30% | ··· | ··· |
| ··· | ··· | ··· | ··· | ··· |
| Hot Standby | 10% | 0% | 0% | 0% |
| Not-Betrieb | 100% | 100% | ··· | ··· |

Bei einer weiteren vorteilhaften Ausgestaltung der Erfindung weist die Filteranlage einen Ausgangs-Staubsensor auf, welcher strömungstechnisch nach dem zumindest einen Elektrodenpaar angeordnet ist und mittels welchem eine Ausgangs-Konzentration der Feststoffpartikel des aus der Filteranlage strömenden Abgases erfasst wird, wobei die jeweilige Vorsteuerung des jeweiligen Elektrodenpaares in Abhängigkeit der erfassten Ausgangs-Konzentration variiert wird.

Mittels des Ausgangs-Staubsensors wird insbesondere kontinuierlich die Staubintensität im Ausgangsluftstrom der Filteranlage erfasst bzw. überwacht. Dabei kann der Ausgangs-Staubsensor dazu verwendet werden, eine Nachjustierung oder auch eine Feinjustierung der jeweiligen Vorsteuerung vorzunehmen. Dies kann beispielsweise von Vorteil sein, wenn die Filteranlage gründlicher oder weniger gründlich als zunächst angenommen filtert und somit weniger oder mehr Feststoffpartikel im Abgas vorhanden sind, wenn dieses die Filteranlage verlässt.

Bei einer weiteren vorteilhaften Ausgestaltung der Erfindung wird die variierte Vorsteuerung dabei in der vorgebbaren Tabelle abgelegt.

Die Ablage der variierten Vorsteuerung in der vorgebbaren Tabelle ermöglicht eine Art Regelung, da für die Ermittlung der Vorsteuerung eine Rückkopplung berücksichtigt wird. Die Rückkopplung wird dadurch verwirklicht, dass auf Grundlage der Daten des Ausgangs-Staubsensors die Vorsteuerung für die jeweilige Prozessphase angepasst wird, so dass beispielsweise eine geringere Spannung für ein jeweiliges Elektrodenpaar vorgesehen wird, als ursprünglich in der Tabelle für diese Prozessphase hinterlegt wurde. Die angepasste Vorsteuerung wird schließlich in der Tabelle hinterlegt, wodurch ältere Einträge für die jeweilige Prozessphase überschrieben werden.

Bei einer weiteren vorteilhaften Ausgestaltung der Erfindung wird die jeweilige Vorsteuerung des jeweiligen Elektrodenpaares dabei derart variiert, dass eine erste vorgebbare Ausgangs-Konzentration nicht überschritten wird.

Als erste vorgebbare Ausgangs-Konzentration können beispielsweise gesetzliche Grenzwerte hinterlegt werden, welche bei der Filterung des Abgases der hüttentechnischen Anlage eingehalten werden müssen. Die Anpassung der jeweiligen Vorsteuerung wird vorzugsweise für alle denkbaren Prozessphasen durchgeführt, so dass insgesamt ein Betrieb der Filteranlage gewährleistet werden kann, welcher in einer Abgasemission im Rahmen der gesetzlichen Grenzwerte resultiert.

Bei einer weiteren vorteilhaften Ausgestaltung der Erfindung wird die jeweilige Vorsteuerung des jeweiligen Elektrodenpaares dabei derart variiert, dass eine zweite vorgebbare Ausgangs-Konzentration nicht unterschritten wird.

Als zweite vorgebbare Ausgangs-Konzentration können Werte hinterlegt werden, welche vergleichsweise niedrig sind und sich beispielsweise im Bereich von lediglich 20 % der gesetzlichen Grenzwerte bewegen. Eine Anpassung der jeweiligen Vorsteuerung ist besonders dann sinnvoll, wenn die vom Ausgangs-Staubsensor erfasste Ausgangs-Konzentration sehr niedrig und insbesondere niedriger als zuvor erwartet ausfällt. Für diesen Fall kann die jeweilige Vorsteuerung derart variiert werden, dass die Abgasemission der Filteranlage etwas erhöht wird, wodurch sich zum Teil beträchtliche Energieeinsparungen und damit auch Kosteneinsparungen realisieren lassen. Sinnvollerweise ist die Erhöhung der Abgasemission dabei derart, dass gesetzliche Grenzwerte eingehalten werden.

Bei einer weiteren vorteilhaften Ausgestaltung der Erfindung wird das jeweilige Elektrodenpaar gemäß einer jeweiligen Not-Vorsteuerung mit einer jeweiligen elektrischen Not-Leistung und/oder einer jeweiligen elektrischen Not-Spannung und/oder einem jeweiligen elektrischen Not-Strom beaufschlagt, falls die Prozessphase der hüttentechnischen Anlage nicht ermittelbar ist, und/oder falls gegebenenfalls der Eingangs-Staubsensor und/oder der Ausgangs-Staubsensor unplausible Messwerte liefert.

Die jeweilige Not-Vorsteuerung kann beim Auftreten von Fehlern zum Einsatz kommen, um auch für solche Situationen eine ausreichende Filterung des Abgases und damit die Einhaltung gesetzlicher Grenzwerte zu gewährleisten. Beispielsweise wird die jeweilige Not-Vorsteuerung derart gewählt, dass das jeweilige Elektrodenpaar wie während jener Prozessphase betrieben wird, während welcher das Abgas am meisten Feststoffpartikel aufweist und die größte Filterwirkung erzielt werden muss. Die Not-Spannung wird auch dabei als Minimalwert der Sprühgrenze bezeichnet.

Ein derartiger Fehlerzustand liegt dann vor, wenn die Prozessphase der hüttentechnischen Anlage nicht verfügbar bzw. unbekannt ist. Dies kann beispielsweise dann der Fall sein, wenn die hüttentechnische Anlage über ein Automatisierungssystem verfügt, welches ausfällt oder fehlerhaft funktioniert. Alternativ oder zusätzlich liegt ein solcher Fehlerzustand vor, wenn die Filteranlage einen Eingangs-Staubsensor bzw. einen Ausgangs-Staubsensor aufweist, wobei einer der Sensoren oder beide Sensoren unplausible Messwerte liefern bzw. liefern. Entsprechend sind Bereiche der jeweiligen Messwerte vorab festgelegt, welche als plausibel bzw. unplausibel angesehen werden.

Bei einer weiteren vorteilhaften Ausgestaltung der Erfindung wird das jeweilige Elektrodenpaar gemäß einer jeweiligen Stand-by-Vorsteuerung mit einer jeweiligen elektrischen Stand-by-Leistung und/oder einer jeweiligen elektrischen Stand-by-Spannung und/oder einem jeweiligen elektrischen Stand-by-Strom beaufschlagt, falls die hüttentechnische Anlage länger als eine vorgebbare Zeitdauer in einem Stand-by-Zustand betrieben wird.

Der Stand-by-Zustand liegt insbesondere in Form einer Produktionspause der hüttentechnischen Anlage vor. Denkbar ist, dass sich in einem Konverter der hüttentechnischen Anlage eine Schmelze befindet, welche vorübergehend nicht weiter verarbeitet wird. Dabei stößt die hüttentechnische Anlage weiterhin eine vergleichsweise geringe Menge und vergleichsweise wenige Feststoffpartikel aufweisendes Abgas aus. Entsprechend kann das jeweilige Elektrodenpaar bei Einhaltung gesetzlicher Grenzwerte mit einer vergleichsweise Energie sparenden Funktionsweise betrieben werden.

Im Folgenden wird die Erfindung anhand der in den Figuren dargestellten Ausführungsbeispiele näher beschrieben und erläutert. Es zeigen:
- FIG 1: ein erstes Ausführungsbeispiel der erfindungsgemäßen Anlage,
- FIG 2: ein zweites Ausführungsbeispiel der erfindungsgemäßen Anlage,
- FIG 3: einen beispielhaften zeitlichen Zusammenhang zwischen einer jeweiligen Vorsteuerung und Prozessphasen eines Konverters, und
- FIG 4: ein beispielhaftes Schema eines Betriebskonzeptes eines weiteren Ausführungsbeispiels der erfindungsgemäßen Anlage.

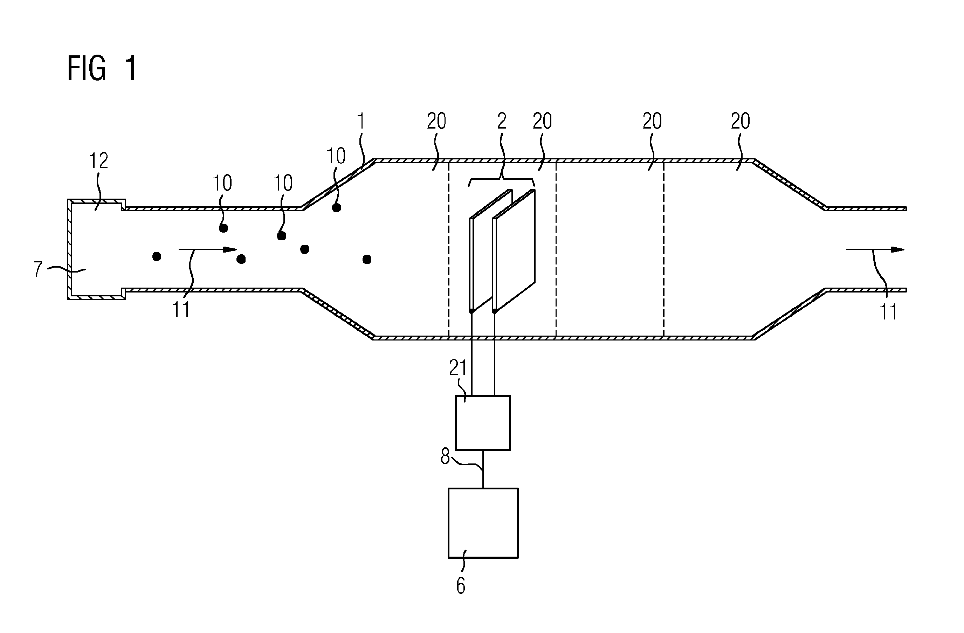

Figur 1 zeigt ein erstes Ausführungsbeispiel der erfindungsgemäßen Anlage. Die Anlage verfügt über eine Filteranlage 1 zur Filterung eines Feststoffpartikel 10 aufweisenden Abgases 11, welches der Anlage von einer hüttentechnischen Anlage 12 zugeführt wird. Die Filterung erfolgt anhand eines Elektrodenpaares 2, an welches eine elektrische Leistung abgebbar ist und welches beispielsweise als Plattenpaar ausgeführt ist. Weiterhin ist die Filteranlage 1 im Rahmen des ersten Ausführungsbeispiels in Strömungsrichtung in vier aufeinanderfolgende Felder 20 unterteilt.

Das Elektrodenpaar 2 wird gemäß einer Vorsteuerung 8 mit einer zu beaufschlagenden elektrischen Leistung beaufschlagt, wobei die Vorsteuerung 8 durch eine Recheneinheit 6 in Abhängigkeit einer Prozessphase 7 der hüttentechnischen Anlage 12 ermittelt wird. Die Recheneinheit 6 übermittelt die ermittelte Vorsteuerung 8 an eine verbundene Hochspannungs-Energieversorgung 21, welches schließlich das Elektrodenpaar 2 mit der zu beaufschlagenden elektrischen Leistung versorgt.

Alternativ oder zusätzlich kann die Vorsteuerung 8 der Gestalt sein, dass das Elektrodenpaar 2 mit einer elektrischen Spannung und/oder einem elektrischen Strom beaufschlagt wird.

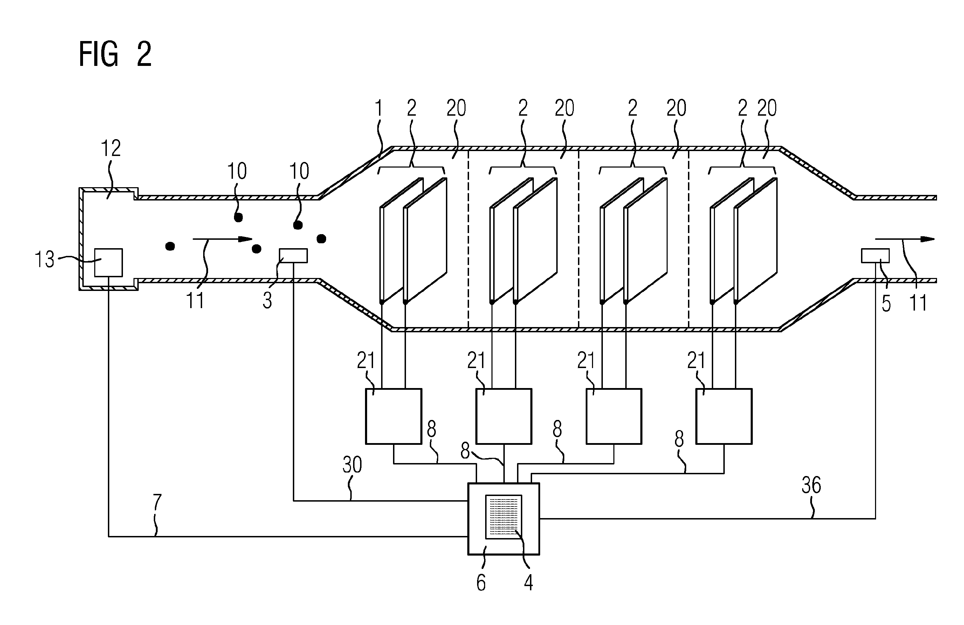

Figur 2 zeigt ein zweites Ausführungsbeispiel der erfindungsgemäßen Anlage. Gleiche Bezugszeichen wie in Figur 1 bezeichnen dabei gleiche Gegenstände.

Die Filteranlage 1 weist vier Elektrodenpaare 2 auf, welche jeweils in einem separaten Feld 20 der Filteranlage 1 untergebracht sind und jeweils von einer separaten Hochspannungs-Energieversorgung 21 versorgbar sind. Weiterhin sind ein Eingangs-Staubsensor 3 und ein Ausgangs-Staubsensor 5 vorgesehen, welcher jeweils strömungstechnisch vor bzw. nach den Elektrodenpaaren 2 angeordnet ist und mittels welchem jeweils eine Eingangs-Konzentration 30 bzw. eine Ausgangs-Konzentration 36 der Feststoffpartikel 10 des Abgases 11 erfasst wird.

Die Recheneinheit 6 ist mit dem Eingangs-Staubsensor 3 und dem Ausgangs-Staubsensor 5 verbunden, so dass die jeweiligen Konzentrationen der Feststoffpartikel 10 an die Recheneinheit 6 übermittelt werden können. Zusätzlich ist die Recheneinheit 6 mit einem Automatisierungssystem 13 der hüttentechnischen Anlage 12 verbunden, so dass der Recheneinheit 6 die jeweilige Prozessphase 7 der hüttentechnischen Anlage 12 zugänglich ist.

Ausgehend von der Prozessphase 7, welche die Recheneinheit 6 beispielsweise direkt von dem Automatisierungssystem 13 erhält oder anhand der übermittelten Eingangs-Konzentration 30 ermittelt, ermittelt die Recheneinheit 6 die jeweilige Vorsteuerung 8 für das jeweilige Elektrodenpaar 2. Hierzu greift die Recheneinheit 6 auf eine vorgebbare Tabelle 4 zurück, in welcher eine Verknüpfung zwischen der ermittelten Prozessphase 7 und der jeweiligen Vorsteuerung 8, insbesondere der jeweiligen zu beaufschlagenden elektrischen Leistung und/oder der jeweiligen zu beaufschlagenden elektrischen Spannung und/oder dem jeweiligen zu beaufschlagenden elektrischen Strom, hinterlegt ist.

Dabei kann die jeweilige Vorsteuerung 8 des jeweiligen Elektrodenpaares 2 insbesondere mittels einer mathematischen Formel aus der erfassten Eingangs-Konzentration 30 berechnet werden.

Zusätzlich oder alternativ kann vorgesehen sein, dass die jeweilige Vorsteuerung 8 des jeweiligen Elektrodenpaares 2 in Abhängigkeit der erfassten Ausgangskonzentration 36 variiert wird, wobei die variierte Vorsteuerung 8 in der vorgebbaren Tabelle 4 abgelegt werden kann.

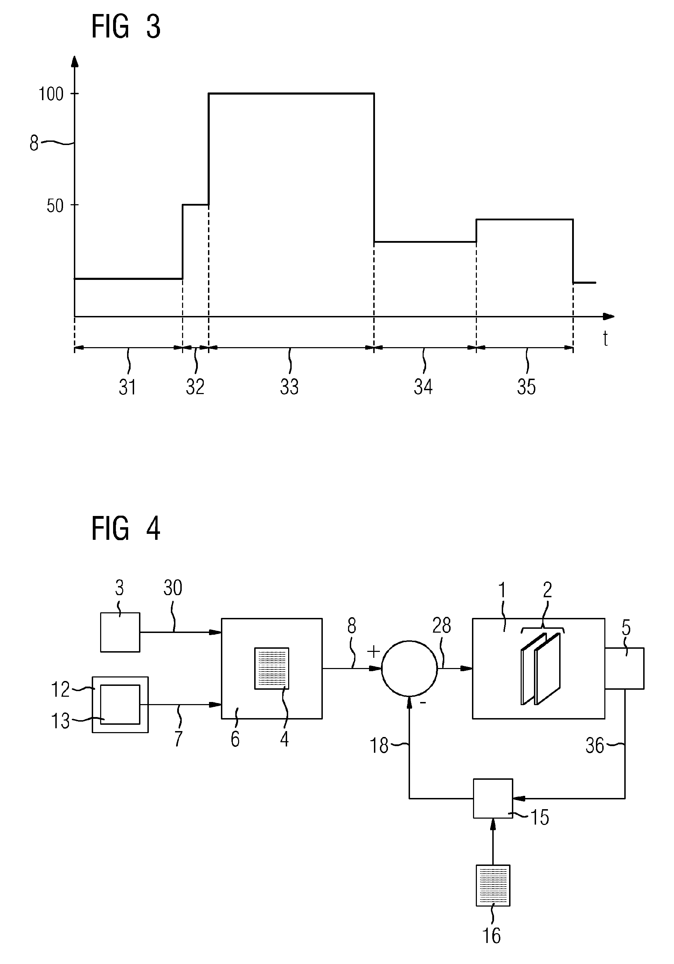

Figur 3 zeigt einen beispielhaften zeitlichen Zusammenhang zwischen einer Vorsteuerung 8 und Prozessphasen 7 eines Konverters. Dabei ist auf der x-Achse die Zeit und auf der y-Achse die Vorsteuerung 8 in Form einer zu beaufschlagenden elektrischen Leistung aufgetragen, mit welcher ein jeweiliges Elektrodenpaar 2 zu beaufschlagen ist, um eine zufriedenstellende Filterung eines Abgases 11 des Konverters zu erreichen. In Abhängigkeit der Prozessphasen 7 "Scrap Charging", welche während des Zeitintervalls 31 stattfindet, "Ignition" 32, "Blowing" 33, "Tapping" 34 und "Slag-Splashing" 35 ist eine unterschiedlich große elektrische Leistung erforderlich, um eine zufriedenstellende Filterung des Abgases 11 zu gewährleisten. Beispielsweise ist die größte Konzentration bzw. Menge des Abgases 11 während des Sauerstoff-Einblasens ("Blowing" 33) zu beobachten, so dass dem jeweiligen Elektrodenpaar 2 dann auch die größte elektrischer Leistung zur Verfügung gestellt werden muss.

Figur 4 zeigt ein beispielhaftes Schema eines Betriebskonzeptes eines weiteren Ausführungsbeispiels der erfindungsgemäßen Anlage. Die Anlage verfügt über eine Filteranlage 1 mit einem Elektrodenpaar 2 und einem jeweils in der Filteranlage 1 angeordneten Eingangs-Staubsensor 3 und Ausgangs-Staubsensor 5. Weiterhin ist ein Automatisierungssystem 13 einer hüttentechnischen Anlage 12 vorgesehen, wobei das Automatisierungssystem 13 sowie der Eingangs-Staubsensor 3 mit einer Recheneinheit 6 verbunden sind. Dabei übermittelt der Eingangs-Staubsensor 3 eine Eingangs-Konzentration 30 und das Automatisierungssystem 13 eine Prozessphase 7 der hüttentechnischen Anlage 12 an die Recheneinheit 6. Die Recheneinheit 6 ermittelt die Prozessphase 7 aus der Eingangs-Konzentration 30 bzw. verwendet die vom Automatisierungssystem 13 erhaltene Prozessphase 7, um anhand einer vorgebbaren Tabelle 4 die Vorsteuerung 8 zu ermitteln.

Die ermittelte Vorsteuerung 8 kann direkt zur Beaufschlagung des Elektrodenpaares 2 verwendet werden oder über eine Regelschleife zu einer Art geregelter Vorsteuerung 28 variiert werden, mit welcher das Elektrodenpaar 2 beaufschlagt wird. Die geregelte Vorsteuerung 28 kann somit als die weiter oben erläuterte variierte Vorsteuerung verstanden werden, welche insbesondere in der vorgebbaren Tabelle 4 abgelegt werden kann.

Die Regelschleife sieht dabei vor, dass eine vom Ausgangs-Staubsensor 5 ermittelte Ausgangs-Konzentration 36 an eine Regeleinheit 15 übermittelt wird, welche einen Vergleich mit vorgebbaren Grenzwerten 16 durchführt und daraus Regelungsvorgaben 18 ableitet, welche zusammen mit der Vorsteuerung 8 zur geregelten Vorsteuerung 28 verarbeitet werden. Die vorgebbaren Grenzwerte 16 können insbesondere weiter oben erläuterte erste vorgebbare Ausgangs-Konzentration bzw. zweite vorgebbare Ausgangs-Konzentration sein, wobei die Regeleinheit 15 auch in die Recheneinheit 6 integriert werden kann. Die Regelungsvorgaben 18 werden insbesondere zur Variation der von der Recheneinheit 6 ermittelten Vorsteuerung 8 und damit zur Beaufschlagung des Elektrodenpaares 2 gemäß der geregelten Vorsteuerung 28 verwendet.

Alternativ oder zusätzlich kann vorgesehen sein, dass die vorgebbare Tabelle 4 der Recheneinheit 6 in Abhängigkeit der Regelungsvorgaben 18 variiert bzw. angepasst wird, so dass Einträge der vorgebbaren Tabelle 4 überschrieben werden.

Zusammenfassend betrifft die Erfindung ein Verfahren zum Betrieb einer Filteranlage zur Filterung eines Feststoffpartikel aufweisenden Abgases einer hüttentechnischen Anlage, wobei die Filteranlage zumindest ein Elektrodenpaar aufweist, welches jeweils mit einer elektrischen Leistung und/oder einer elektrischen Spannung und/oder einem elektrischen Strom beaufschlagbar ist. Weiterhin betrifft die Erfindung ein System zum Betrieb einer derartigen Filteranlage und eine Anlage zur Filterung eines Stoffpartikel aufweisenden Abgases einer hüttentechnischen Anlage, welche eine derartige Filteranlage umfasst. Um ein Verfahren bzw. eine Vorrichtung bereitzustellen, mittels welchem bzw. welcher ein Feststoffpartikel aufweisendes Abgas einer hüttentechnischen Anlage ressourcenschonender gefiltert werden kann, werden die folgenden Verfahrensschritte vorgeschlagen:
- Ermitteln einer Prozessphase der hüttentechnischen Anlage,
- Ermitteln einer jeweiligen, von der ermittelten Prozessphase abhängigen Vorsteuerung des jeweiligen Elektrodenpaares, wobei die jeweilige ermittelte Vorsteuerung eine jeweilige zu beaufschlagende elektrische Leistung und/oder eine jeweilige zu beaufschlagende elektrische Spannung und/oder einen jeweiligen zu beaufschlagenden elektrischen Strom umfasst,
- Beaufschlagen des jeweiligen Elektrodenpaares gemäß der jeweiligen ermittelten Vorsteuerung. Weiterhin wird diese Aufgabe durch ein System der eingangs genannten Art dadurch gelöst, dass das System eine Recheneinheit aufweist, mittels welcher eine Prozessphase der hüttentechnischen Anlage und eine jeweilige, von der ermittelten Prozessphase abhängige Vorsteuerung des jeweiligen Elektrodenpaares ermittelbar sind, wobei die jeweilige ermittelte Vorsteuerung eine jeweilige zu beaufschlagende elektrische Leistung und/oder eine jeweilige zu beaufschlagende elektrische Spannung und/oder einen jeweiligen zu beaufschlagenden elektrischen Strom umfasst. Schließlich wird diese Aufgabe durch eine Anlage der eingangs genannten Art dadurch gelöst, dass die Anlage ein derartiges System aufweist.

## Patentansprüche

1. Verfahren zum Betrieb einer Filteranlage (1) zur Filterung eines Feststoffpartikel (10) aufweisenden Abgases (11) einer hüttentechnischen Anlage (12),
wobei die Filteranlage (1) zumindest ein Elektrodenpaar (2) aufweist, welches jeweils mit einer elektrischen Leistung und/oder einer elektrischen Spannung und/oder einem elektrischen Strom beaufschlagbar ist,
**gekennzeichnet durch** die folgenden Verfahrensschritte:
- Ermitteln einer Prozessphase (7) der hüttentechnischen Anlage (12),
- Ermitteln einer jeweiligen, von der ermittelten Prozessphase (7) abhängigen Vorsteuerung (8) des jeweiligen Elektrodenpaares (2), wobei die jeweilige ermittelte Vorsteuerung (8) eine jeweilige zu beaufschlagende elektrische Leistung und/oder eine jeweilige zu beaufschlagende elektrische Spannung und/oder einen jeweiligen zu beaufschlagenden elektrischen Strom umfasst,
- Beaufschlagen des jeweiligen Elektrodenpaares (2) gemäß der jeweiligen ermittelten Vorsteuerung (8).

2. Verfahren nach Anspruch 1,
wobei die hüttentechnische Anlage (12) ein Automatisierungssystem (13) aufweist,
wobei das Automatisierungssystem (13) die Prozessphase (7) der hüttentechnischen Anlage (12) bereitstellt.

3. Verfahren nach Anspruch 2,
wobei die Prozessphase (7) jeweils bei einer Änderung der Prozessphase (7) der hüttentechnischen Anlage (12) bereitgestellt wird.

4. Verfahren nach einem der vorhergehenden Ansprüche,
wobei die hüttentechnische Anlage (12) einen Konverter aufweist,
wobei zur Ermittlung der Prozessphase (7) der hüttentechnischen Anlage (12) eine Position und/oder ein Drehwinkel des Konverters bereitgestellt wird.

5. Verfahren nach einem der vorhergehenden Ansprüche,
wobei die Filteranlage (1) einen Eingangs-Staubsensor (3) aufweist, welcher strömungstechnisch vor dem zumindest einen Elektrodenpaar (2) angeordnet ist und mittels welchem eine Eingangs-Konzentration (30) der Feststoffpartikel (10) des in die Filteranlage (1) strömenden Abgases (11) erfasst wird, wobei die Prozessphase (7) der hüttentechnischen Anlage (12) anhand der erfassten Eingangs-Konzentration (30) ermittelt wird.

6. Verfahren nach einem der Ansprüche 1-4,
wobei die Filteranlage (1) einen Eingangs-Staubsensor (3) aufweist, welcher strömungstechnisch vor dem zumindest einen Elektrodenpaar (2) angeordnet ist und mittels welchem eine Eingangs-Konzentration (30) der Feststoffpartikel (10) des in die Filteranlage (1) strömenden Abgases (11) erfasst wird, wobei die jeweilige Vorsteuerung (8) des jeweiligen Elektrodenpaares (2) mittels einer mathematischen Formel aus der erfassten Eingangs-Konzentration (30) berechnet wird.

7. Verfahren nach einem der vorhergehenden Ansprüche,
wobei die jeweilige Vorsteuerung (8) des jeweiligen Elektrodenpaares (2) mittels einer vorgebbaren Tabelle (4) ermittelt wird, in welcher eine Verknüpfung zwischen der ermittelten Prozessphase (7) und der jeweiligen zu beaufschlagenden elektrischen Leistung und/oder der jeweiligen zu beaufschlagenden elektrischen Spannung und/oder dem jeweiligen zu beaufschlagenden elektrischen Strom hinterlegt ist.

8. Verfahren nach einem der vorhergehenden Ansprüche,
wobei die Filteranlage (1) einen Ausgangs-Staubsensor (5) aufweist, welcher strömungstechnisch nach dem zumindest einen Elektrodenpaar (2) angeordnet ist und mittels welchem eine Ausgangs-Konzentration (36) der Feststoffpartikel (10) des aus der Filteranlage (1) strömenden Abgases (11) erfasst wird,
wobei die jeweilige Vorsteuerung (8) des jeweiligen Elektrodenpaares (2) in Abhängigkeit der erfassten Ausgangs-Konzentration (36) variiert wird.

9. Verfahren nach Anspruch 7 und 8,
wobei die variierte Vorsteuerung (8) in der vorgebbaren Tabelle (4) abgelegt wird.

10. Verfahren nach Anspruch 8 oder 9,
wobei die jeweilige Vorsteuerung (8) des jeweiligen Elektrodenpaares (2) derart variiert wird, dass eine erste vorgebbare Ausgangs-Konzentration nicht überschritten wird.

11. Verfahren nach einem der Ansprüche 8-10,
wobei die jeweilige Vorsteuerung des jeweiligen Elektrodenpaares (2) derart variiert wird, dass eine zweite vorgebbare Ausgangs-Konzentration nicht unterschritten wird.

12. Verfahren nach einem der vorhergehenden Ansprüche,
wobei das jeweilige Elektrodenpaar (2) gemäß einer jeweiligen Not-Vorsteuerung mit einer jeweiligen elektrischen Not-Leistung und/oder einer jeweiligen elektrischen Not-Spannung und/oder einem jeweiligen elektrischen Not-Strom beaufschlagt wird,
falls die Prozessphase (7) der hüttentechnischen Anlage (12) nicht ermittelbar ist,
und/oder falls gegebenenfalls der Eingangs-Staubsensor (3) und/oder der Ausgangs-Staubsensor (5) unplausible Messwerte liefert.

13. Verfahren nach einem der vorhergehenden Ansprüche,
wobei das jeweilige Elektrodenpaar (2) gemäß einer jeweiligen Stand-by-Vorsteuerung mit einer jeweiligen elektrischen Stand-by-Leistung und/oder einer jeweiligen elektrischen Stand-by-Spannung und/oder einem jeweiligen elektrischen Stand-by-Strom beaufschlagt wird,
falls die hüttentechnische Anlage (12) länger als eine vorgebbare Zeitdauer in einem Stand-by-Zustand betrieben wird.

14. System zum Betrieb einer Filteranlage (1) zur Filterung eines Feststoffpartikel (10) aufweisenden Abgases (11) einer hüttentechnischen Anlage (12),
wobei die Filteranlage (1) zumindest ein Elektrodenpaar (2) aufweist, welches jeweils mit einer elektrische Leistung und/oder einer elektrischen Spannung und/oder einem elektrischen Strom beaufschlagbar ist,
**gekennzeichnet durch**
eine Recheneinheit (6), mittels welcher eine Prozessphase (7) der hüttentechnischen Anlage (12) und eine jeweilige, von der ermittelten Prozessphase (7) abhängige Vorsteuerung (8) des jeweiligen Elektrodenpaares (2) ermittelbar sind, wobei die jeweilige ermittelte Vorsteuerung (8) eine jeweilige zu beaufschlagende elektrische Leistung und/oder eine jeweilige zu beaufschlagende elektrische Spannung und/oder einen jeweiligen zu beaufschlagenden elektrischen Strom umfasst.

15. Anlage zur Filterung eines Stoffpartikel (10) aufweisenden Abgases (11) einer hüttentechnischen Anlage (12) umfassend:
- eine Filteranlage (1) zur Filterung des Feststoffpartikel (10) aufweisenden Abgases der hüttentechnischen Anlage,
wobei die Filteranlage (1) zumindest ein Elektrodenpaar (2) aufweist, welches jeweils mit einer elektrischen Leistung und/oder einer elektrischen Spannung und/oder einem elektrischen Strom beaufschlagbar ist,
**gekennzeichnet durch**
- ein System nach Anspruch 13.
